Europäisches Patentamt

European Patent Office

Office européen des brevets

(19)

(11) Veröffentlichungsnummer : **0 205 406 B1**

(12) **EUROPÄISCHE PATENTSCHRIFT**

(45) Veröffentlichungstag der Patentschrift :
**10.04.91 Patentblatt 91/15**

(51) Int. Cl.$^5$ : **G01S 17/32, G01S 7/48**

(21) Anmeldenummer : **86810250.0**

(22) Anmeldetag : **09.06.86**

(54) **Elektrooptisches Distanzmessgerät**

(30) Priorität : **12.06.85 CH 2474/85**

(43) Veröffentlichungstag der Anmeldung :
**17.12.86 Patentblatt 86/51**

(45) Bekanntmachung des Hinweises auf die
Patenterteilung :
**10.04.91 Patentblatt 91/15**

(84) Benannte Vertragsstaaten :
**AT BE DE FR GB IT NL SE**

(56) Entgegenhaltungen :
**DE-A- 1 548 407
DE-A- 2 229 339
DE-A- 2 312 017
FR-A- 1 392 987
GB-A- 1 172 668
GB-A- 1 274 251
US-A- 3 159 803
US-A- 3 200 698
US-A- 3 424 531
US-A- 3 482 436
US-A- 3 521 956**

(56) Entgegenhaltungen :
**US-A- 4 199 226
APPLIED OPTICS, Band 11, Nr. 4, April 1972,
Seiten 749-754, New York, US; K.B.
EARNSHAW et al.: "Two-laser optical distan-
ce-measuring instrument that corrects for the
atmospheric index of refraction"
PATENT ABSTRACTS OF JAPAN, Band 10, Nr.
106 (P-449)[2163], 22. April 1986; & JP-A-60 238
776
ELECTRONIC ENGINEERING, Band 38, Heft
Nr. 459, Mai 1966, Seiten 282,283, London, GB;
R.H. BRADSELL: "The electronic priciples of
the Mekometer II"
PROCEEDINGS OF THE IEEE, Band 58, Nr. 10,
Oktober 1970, Seiten 1440-1447, New York, US;
F.-S. CHEN: "Modulators for optical communications"**

(73) Patentinhaber : **Leica Aarau AG
Schachenallee 25
CH-5000 Aarau (CH)**

(72) Erfinder : **Meier, Dietrich, Dr.
Leimenstrasse 682
CH-5015 Niedererlinsbach (CH)**

**Beschreibung**

Die Erfindung betrifft ein elektrooptisches Distanzmessgerät mit Mitteln zur Erzeugung eines kollimierten Lichtstrahles, Modulationsmitteln zur Modulation des kollimierten Lichtstrahles mit einer bestimmten Folge von Modulationsfrequenzen, Mitteln zur Führung des modulierten Lichtstrahles über die zwischen den Modulationsmitteln und einem Lichtreflektor befindliche Messdistanz, sowie zur Rückführung des modulierten Lichtstrahles über die Messdistanz bis zu den Modulationsmitteln, Mitteln zur Erzeugung und zur Auswahl von Modulationssignalen mit Modulationsfrequenzen aus der bestimmten Folge zum Betrieb der Modulationsmittel, Detektionsmitteln zur Bestimmung eines bestimmten Wertes der Modulationsphase des von den Modulationsmitteln empfangenen modulierten Lichtstrahles bezogen auf den Lichtstrahl bei der Modulation, sowie Mitteln zur Berechnung der Messdistanz aus den mit den Detektionsmitteln bestimmten Modulationsfrequenzen.

Elektrooptische Distanzmessgeräte unter Ausnutzung der Ausbreitungsgeschwindigkeit des Lichtes im Raum, bzw. in der Luft sind in verschiedenen Formen bereits seit längerer Zeit bekannt. In der Praxis am meisten durchgesetzt haben sich Geräte, bei denen die Helligkeit eines Lichtstrahles sinusförmig moduliert wird. Bei zweimaligem Durchlaufen der Messstrecke bis zu einem Reflektor und wieder zurück erfährt die Modulation eine Phasenverzögerung, die mit optischen und elektrischen Mitteln gemessen wird und distanzabhängig ist. Im Zuge der Entwicklung der elektrischen Zeitmesstechnik hat man auch schon die Laufzeit einzelner Lichtimpulse oder Blitze einmalig oder wiederholt zur Distanzmessung gemessen.

Ein elektrooptisches Distanzmessgerät der genannten Art mit Messung der Phasenverzögerung ist aus DE-A-2 312 017 (AGA) bekannt. Es handelt sich hierbei um ein elektro-optisches Vermessungsgerät mit einer Einrichtung zur Modulation der Strahlungsquelle mit einer oder mehreren Frequenzen, einer Einrichtung zur Speisung der Modulations-Einrichtung mit einem Referenzfrequenzsignal, so dass die Strahlungsquelle mit der Referenzfrequenz moduliert wird, einer strahlungsempfindlichen Einrichtung für den Empfang von Rücklauf-Strahlungssignalen und einer Einrichtung zum Phasenvergleich des Referenzsignals mit dem Rücklaufsignal, um so eine Messung der von der Strahlung durchlaufenen Strecke zu erhalten.

Das Gerät umfasst ferner einen externen optischen Pfad, der die gesamte Strecke umfasst, die die modulierte Strahlung von der Strahlungsmodulations-Einrichtung durch das Instrument zu einem Target und zurück durch das Gerät zu der strahlungsempfindlichen Einrichtung durchläuft, einen internen optischen Pfad, der die Strecke umfasst die die modulierte Strahlung von der strahlungsmodulierenden Einrichtung durch das Gerät zu der strahlungsempfindlichen Einrichtung durchläuft, eine Einrichtung zur wahlweisen Messung entweder des internen oder aber des externen optischen Pfades sowie eine Einrichtung zur Wiedergabe der gemessenen Entfernung. Die Einrichtung zum Phasenvergleich weist eine Einrichtung zur Berechnung der zu messenden Entfernung aus der Differenz von externem und internem Pfad und einer Additionskonstanten auf. Diese Berechnungs-Einrichtung erzeugt der gemessenen Entfernung entsprechende Signale und steuert die Wiedergabeeinrichtung so, dass sie die gemessene Entfernung anzeigt.

Bei elektrooptischen Distanzmessgeräten, welche zur Aussendung und zum Empfang der Messstrahlung dieselben optischen Mittel verwenden, sind Vorrichtungen zweckmässig, welche die zurückkehrende Strahlung von der Strahlungsquelle ablenken. Eine derartige Vorrichtung ist beispielsweise aus US-A-4,199,226 (Weber et al.) bekannt. Diese Sende- und Empfangseinrichtung umfasst einen Laser zur Erzeugung und Abstrahlung von monochromatischem Licht mit einem in einem optischen Resonator angeordneten aktiven Medium. Der Resonator unterhält einen Lichtstrahl und besitzt einen Auskoppelspiegel für den Lichtstrahl. Zur Detektion eines reflektierten Anteils des ausgesendeten Lichtstrahls ist ein Photodetektor angeordnet.

Ein Polarisator befindet sich im Strahlengang des Resonators und ein Polarisations-Umsetzer ausserhalb des Resonators im Weg des ausgestrahlten Lichtes, wobei der Polarisator eine von zwei zueinander senkrecht linear polarisierten Strahlkomponenten durchlässt und die andere linear polarisierte Komponente aus dem Resonator heraus auf den Photodetektor umlenkt. Der Polarisations-Umsetzer setzt linear polarisiertes Licht in zirkular polarisiertes um und umgekehrt. Ein Filter, welcher einen Spektralbereich innerhalb des und schmaler als der Verstärkungsbereich des Lasers überträgt, ist im Strahlengang des Resonators zwischen Polarisator und Auskoppelspiegel angeordnet.

Weniger verbreitet sind Messgeräte, die nach der sogenannten Zahnradmethode (A.H.L. Fizeau, 1846) arbeiten. Dabei wurde ursprünglich ein Lichtstrahl durch ein Zahnrad periodisch unterbrochen, dann zu einem Reflektor gesendet und schliesslich wieder am gleichen Zahnrad ein zweites Mal periodisch unterbrochen. Aus der Drehzahl des Zahnrades im Falle einer Auslöschung des rückkehrenden Lichtstrahles lässt sich dessen Laufzeit durch Vergleich mit der Laufzeit eines Zahnradzahnes bis zur nächsten Zahnlücke bestimmen.

Moderne Messgeräte nach der Zahnradmethode verwenden anstelle des Zahnrades elektrooptische Kristalle als Modulator (U.S.-PS 3,424,531, P.L. Bender et al.). Dabei wird der Messstrahl nicht mehr periodisch unterbrochen, sondern die elliptische Polarisierung wird periodisch verändert. Moduliert man im Kristall einen linear polarisierten Lichtstrahl mit bezüglich der Kristallachsen geeigneter Lage der Polarisationsebene mit einem Sinussignal von einigen 100 MHz und treffen reflektierte Strahlanteile beim 2. Kristalldurchgang in umgekehrter Richtung die gleiche Modulationsphase an, wie beim 1. Durchgang, so erhält man die ursprüngliche zeitlich konstante Linearpolarisation wieder zurück und beobachtet an einem geeigneten Polarisations-Analysatorfilter Helligkeitsauslöschung.

In diesem Fall befindet sich in jedem Moment gerade eine ganze Anzahl von Modulationswellenlängen auf der doppelten Messdistanz zwischen Modulatorkristall und Reflektor. Beobachtet man kein Helligkeitsminimum, so kann man ein solches herbeiführen, indem man die Messdistanz oder die Modulationswellenlänge ändert. Beides ist gemäss dem Stand der Technik bekannt (vgl. auch GB-PS 919,368, K.D. Froome et al.).

Ein Nachteil eines in einem bekannten Distanzmessgerät verwendeten KDP-Modulatorkristalles ist die hohe benötigte Modulationsspannung (vgl. F.S. Chen, Modulators for Optical Communications, Proc. IEEE, October 1970, Seite 1445). Bekannte Lithiumniobat-kristalle ($LiNbO_3$) benötigen für den gleichen Modulationsgrad des Lichtes eine wesentlich niedrigere Modulationsspannung. Demgegenüber ist die für die Modulation wirksame statische Doppelbrechung bei $LiNbO_3$ wesentlich stärker temperaturempfindlich als bei KDP. Es hat daher nicht an Versuchen gefehlt, diese Temperaturempfindlichkeit zu minimieren (vgl. F.S. Chen a.a.O. Seite 1443). So hat man den Modulatorkristall in 2 komponenten aufgetrennt, zwischen welchen eine lambda/2-Platte angeordnet wird, oder man dreht die 2. komponente um 90° gegen die erste (vgl. F.S. Chen a.a.O. Seite 1446). Dies setzt allerdings voraus, dass die räumliche und zeitliche Temperaturverteilung in beiden kristallkomponenten gleich ist.

Aufgabe der Erfindung ist es, ein elektrooptisches Distanzmessgerät mit einem Modulator anzugeben, bei dem Temperatureinflüsse besser kompensiert sind als bei bekannten Modulatoren.

Diese Aufgabe wird bei einem elektrooptischen Distanzmessgerät der eingangs gennanten Art dadurch gelöst, dass die Modulationsmittel zur Modulation für den kollimierten Lichtstrahl einen elektrooptischen Modulatorkristall und eine, an eine im Lichtstrahl verwendete Lichtwellenlänge angepasste Viertelwellenlängenplatte umfassen derart, dass der Lichtstrahl bei der Modulation zuerst den elektrooptischen Modulatorkristall, dann die Viertelwellenlängenplatte, die Messdistanz, dann in umgekehrter Richtung nochmals die Messdistanz, die Viertelwellenlängenplatte und schliesslich wieder den elektrooptischen Modulatorkristall durchläuft.

Dieses Distanzmessgerät umfasst zweckmässig einen polarisierenden Strahlenteiler, welcher derart zwischen den Mitteln zur Erzeugung des kollimierten Lichtstrahles und dem elektrooptischen Modulatorkristall angeordnet ist, dass der Lichtstrahl beim ersten Durchgang linear polarisiert wird und nach zweimaligem Durchgang durch die Viertelwellenlängenplatte und den elektrooptischen Modulatorkristall beim zweiten Durchgang von den Mitteln zu seiner Erzeugung isoliert und auf die Detektionsmittel umgelenkt werden kann.

Mit Vorteil ist der vom Lichtstrahl durchlaufene elektrooptische Modulatorkristall in einem Hohlraum eines Mikrowellenresonators mit zwei gekoppelten Hohlräumen montiert, wobei sich in dem anderen Hohlraum ein zweiter elektrooptischer Kristall befindet, der nicht vom Lichtstrahl durchlaufen wird, aber die gleichen mikrowellentechnischen Eigenschaften aufweist, wie der elektrooptische Modulatorkristall. Dabei weisen der vom Lichtstrahl durchlaufene elektrooptische Modulatorkristall und der zweite elektrooptische kristall zweckmässig Dielektrizitätskonstanten mit gleicher Temperaturabhängigkeit auf.

Die Erfindung wird nachfolgend anhand eines in den Zeichnungen schematisch dargestellten Ausführungsbeispieles näher beschrieben. Es zeigen

Fig. 1 ein Schema eines erfindungsgemässen elektrooptischen Distanzmessgerätes,
Fig. 2 einen Teilschnitt eines Mikrowellenresonators für das Gerät gemäss Fig. 1,
Fig. 3 eine Draufsicht auf den Mikrowellenresonator gem. Fig. 2,
Fig. 4 ein Schema einer Variante des Distanzmessgerätes,
Fig. 5 ein Schema einer Frequenz-Steuerstufe gem. Fig. 4, und
Fig. 6 einen schematischen Schnitt eines Modulators für das Gerät gem. Fig. 4.

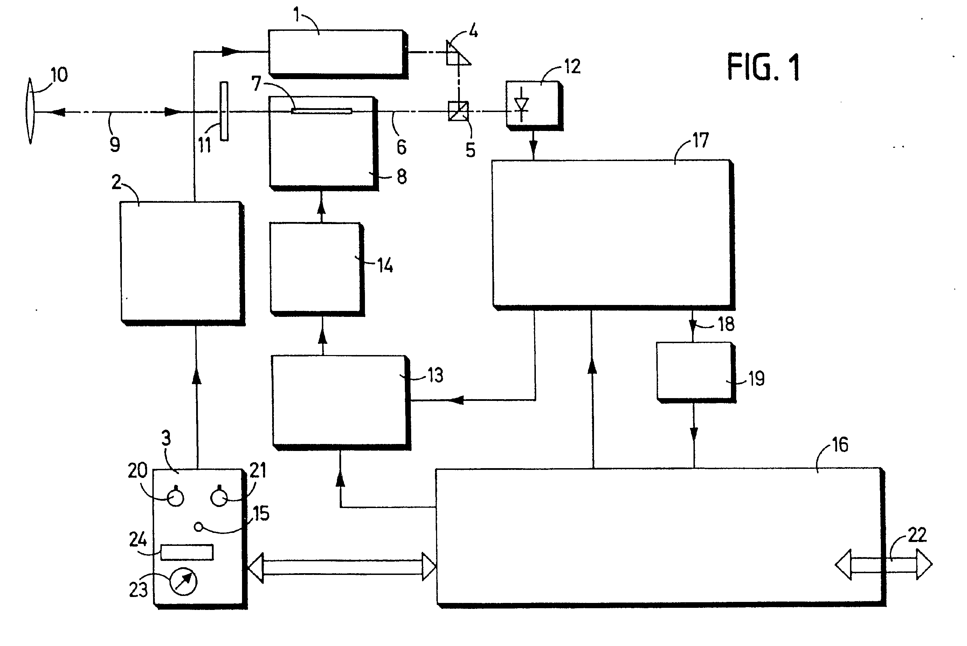

Ein He-Ne-Laser 1 gemäss Fig. 1 wird von einer Stromversorgungsstufe 2 gespeist, welche von einem Bedienpult 3 gesteuert wird. Der Strahl des Lasers 1 gelangt über ein Umlenkprisma 4 auf einen polarisierenden Strahlenteiler 5, an dem er linear polarisiert wird. Der linear polarisierte Strahl 6 durchsetzt dann einen elektrooptischen Modulatorkristall 7, der sich im Leitungsresonator eines Modulators 8 befindet. Der in seiner elliptischen Polarisation modulierte Laserstrahl 9 gelangt dann über eine Optik 10 auf die Messstrecke, deren Länge gemessen werden soll und typisch zwischen einigen m und einigen km liegt. An ihrem anderen Ende ist die Messstrecke durch einen nicht mit dargestellten Reflektor begrenzt, der den modulierten Laserstrahl 9 zum Modulatorkristall 7 zurücksendet. Auf seinem Weg vom Modulatorkristall 7 zur Optik 10 und zurück durchläuft der Laserstrahl 9 zweimal eine Viertelwellenplatte 11. Ohne die Wirkung des Modulators 8 weist deshalb der zurückkehrende linear polarisierte Laserstrahl 6 gegenüber dem ausgesendeten Strahl eine um 90° gedrehte Polarisationsebene auf, sodass er den polarisierenden Strahlenteiler 5 geradlinig durchläuft und auf einen Photoempfänger 12 trifft.

Der Modulatorkristall 7 ist ein Lithium-Niobat-Kristall, der von einer Mikrowellenquelle 13 über einen Treiber-Verstärker 14 mit einem Modulationssignal variabler und einstellbarer Frequenz beaufschlagt wird. Hat das periodische Modulationssignal z.B. eine Frequenz von 500 MHz, so läuft nach je 2 ns eine Modulationswelle von 60 cm Länge auf die Messstrecke. Beträgt die doppelte Länge der Messstrecke gerade ein ganzzahliges Vielfaches der Modulationswellenlänge 60 cm, so haben am messstreckenseitigen Ende des Modulatorkristalles 7 der auslaufende und der zurückkehrende Laserstrahl 9 zu jedem Zeitpunkt die gleichen Modulationszustände. Der rückkehrende Strahl wird dann vom Kristall 7 gerade vollständig demoduliert und erhält seine lineare polarisation zurück, wegen der $\lambda/4$-Platte 11 allerdings mit um 90° gedrehter polarisationsebene, sodass am Photoempfänger 12 ein Helligkeitsmaximum auftritt. Weil die Modulationswirkung insbesondere beim verwendeten $LiNiO_3$-Kristall stark temperaturabhängig ist, sieht die Erfindung Modulation und Demodulation an ein und demselben Kristall 7 im sog. "round-trip-mode" vor, wobei infolge der $\lambda/4$-Platte 11 eine Polarisationsdrehung erfolgt, damit sich temperaturbedingte statische Doppelbrechungseffekte zu jedem Zeitpunkt kompensieren. Verändert man die Frequenz an der Mikrowellenquelle 13, so ist das Verhältnis von doppelter Messstreckenlänge zu Modulationswellenlänge nicht mehr ganzzahlig, und die Helligkeit am Photoempfänger 12 zeigt einen charakteristischen periodischen Verlauf mit Maxima und ausgeprägten Minima.

Beim weiter unten genauer beschriebenen Messablauf wird nach Auslösung mittels einer Start-Taste 15 am Bedienpult 3 durch eine Steuerstufe 16 an der Mikrowellenquelle 13 eine Folge steigender oder fallender Frequenzen nacheinander eingestellt. Mittels eines Steuersignales aus einer Synchronisierstufe 17 wird jeder eingestellten Frequenz noch eine Frequenzmodulation (Wobble) im 1 kHz-Rhythmus mit je nach Messdistanz ± 5 kHz oder ± 25 kHz Frequenzhub aufgeprägt. Auf diese Weise wertet man den genannten charakteristischen Signalverlauf am Photoempfänger 12 durch Abtasten in zwei um ± 5 kHz, bzw. ± 25 kHz frequenzbenachbarten Detektionskanälen I und II mit der Synchronisierstufe 17 aus. Dabei ist die Steuerstufe 16 so programmiert, dass durch zeitliche Mittelung der den jeweiligen Minima entsprechenden Frequenzen atmosphärische Schwankungen des optischen Messweges ausgeglichen werden.

Beim oben erwähnten Fall, dass die doppelte Länge der Messstrecke gerade ein ganzzahliges Vielfaches der Modulationswellenlänge ist, beträgt die Laufzeit 2T des Lichtes vom Modulator 7 bis zum Reflektor und zurück gerade ein ganzzahliges Vielfaches $\gamma$ der Modulationsperiode t = 2 ns, also 2T = $\gamma$ · t. Dabei ist aber der Zahlenwert von $\gamma$ noch unbekannt. Diese Mehrdeutigkeit wird in an sich bekannter Weise dadurch behoben, dass man für zwei oder mehrere aufeinanderfolgende Minima des Signalverlaufes am Photoempfänger 12 die Modulationsfrequenzen, bzw. Modulationsperioden t bestimmt. Trat für das Vielfache $\gamma$ das Minimum bei der Modulationsperiode $t_\gamma$ auf und für das n.-te darauffolgende Vielfache ($\gamma$ + n) bei der Modulationsperiode $t_{\gamma+n}$, so ist in jedem Falle die Laufzeit 2T = $\gamma$ · $t_\gamma$ = ($\gamma$ + n) · $t_{\gamma+n}$. Daraus erhält man das gesuchte Vielfache $\gamma = n \cdot t_{\gamma+n}/(t_\gamma - t_{\gamma+n})$, die Laufzeit $T = \frac{1}{2}\gamma \cdot t$ und die Messstrecke L = c · T, wobei die Lichtgeschwindigkeit C in bekannter Weise von Druck, Temperatur und Feuchte der Luft abhängt.

Die Auswertung des Ausgangssignales des Photoempfängers 12 erfolgt wie bereits erwähnt mittels der Synchronstufe 17 und der Steuerstufe 16. Dabei tastet ein in der Stufe 17 vorgesehener Synchrondetektor synchron mit dem Steuersignal für die Frequenzmodulation der Mikrowellenquelle 13 das Signal des Empfängers 12 immer dann ab, wenn die gewobbelte Modulationsfrequenz für den Modulator 8 ihre relativen Maxima (Kanal II) und Minima (Kanal I) erreicht. Bis zum Eintreffen der jeweils folgenden Abtastwerte hält der Synchrondetektor die Werte in den Kanälen I und II. Durch Differenzbildung zwischen den Kanälen I und II und Ausmittelung der Differenz erhält man ein Analogsignal, dessen Vorzeichen die Ablage des Signals des Empfängers 12 vom Minimum angibt. Dieses Analogsignal gelangt auf einer Leitung 18 auf einen Analog-Digitalwandler 19, der es in ein digitales 8-Bit-Signal wandelt und der Steuerstufe 16 zuführt. Die Steuerstufe 16 dient zur programmierten Steuerung der Frequenzen der Mikrowellenquelle 13, zur Ermittlung der oben beschriebenen charakteristischen Modulationsperioden $t_{\gamma+n}$ aus dem digitalen 8-Bit-Signal vom A/D-Wandler 19, zur Ausgabe der Messergebnisse und zur Steuerung des Frequenzhubs ± 5 kHz, bzw. ± 25 kHz über die Synchronstufe 17 und die Mikrowellenquelle 13.

Am Bedienpult 3 sind andererseits noch Schalter 20 und 21 zur manuellen Auswahl von Betriebsarten über die Steuerstufe 16 vorhanden. Mit dem Schalter 20 kann man den oben beschriebenen Frequenzhub von ± 5 kHz oder ± 25 kHz für grosse oder für kleinere Messdistanzen wählen. Der Schalter 21 hat die Stellungen AUS, FERN, MESS, BATTERIE-TEST. Bei der Stellung FERN ist der Messablauf, sowie die Ausgabe der Ergebnisse extern über einen ASB ("american standard code for information interchange single line bus") 22 steuerbar, bei der Stellung BATTERIE-TEST kann man die Spannung der Batterie für die Stromversorgung des Distanzmessgerätes an einem Instrument 23 ablesen. Bei Stellung MESS dient das Instrument 23 ausserdem der Anzeige der oben beschriebenen Ablage des Signals des Empfängers 12 vom Minimum. Eine digitale Anzeige 24 dient der Anzeige der gemessenen Distanzen.

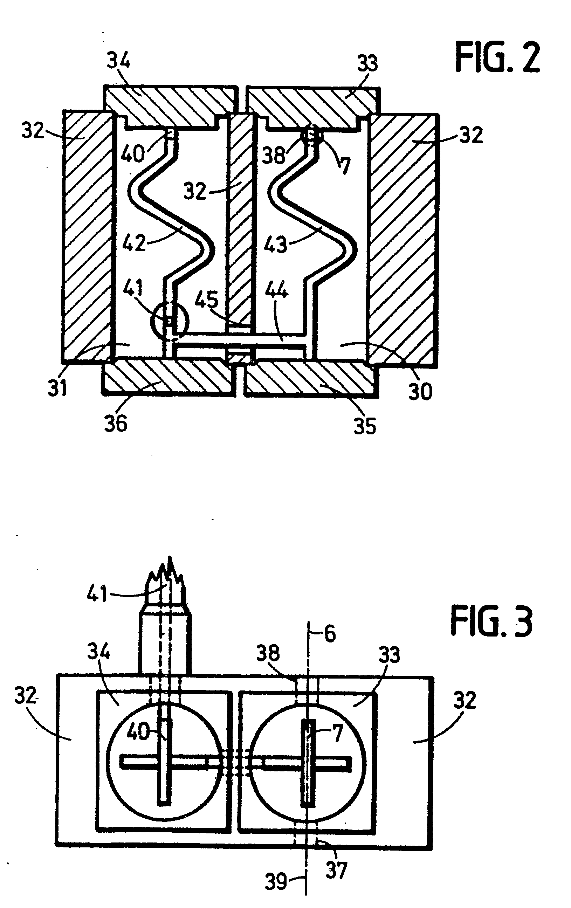

Wie oben beschrieben, soll der Modulator 8 eine Folge von Modulationssignalen mit relativ grossem Frequenzumfang verarbeiten, damit bei einem gegebenen Messfehler der Modulationsperioden $t_{\gamma+n}$ der Relativfehler von $t_\gamma - t_{\gamma+n}$ und von $\gamma$, T und L möglichst klein wird. Zur Erzielung einer dafür geeigneten Bandfiltercharakteristik ist der Modulatorkristall 7 in einem Hohlraum 30 eines Mikrowellen-Leitungsresonators mit zwei gekoppelten Hohlräumen 30, 31 montier, wie es in den Fig. 2 und 3 erkennbar ist. Die beiden zylinderförmigen Hohlräume 30, 31 sind mit geringem Abstand und parallel in einem quaderförmigen Werkstück 32 ausgebohrt, welches Fig. 2 im Teilschnitt von der Seite zeigt. Beide Hohlräume 30, 31 sind durch Deckel 33, 34 und Bodenteile 35, 36 verschlossen. Die quadratischen Deckel sind in der Draufsicht gemäss Fig. 3 transparent dargestellt, um einen Einblick in die Hohlräume 30, 31 zu gewähren, obwohl der Mikrowellenresonator natürlich mindestens an seinen Oberflächen metallische elektrische Leitfähigkeit besitzt. Wie ersichtlich, ist der stabförmige Modulatorkristall 7 zentral am Deckel 33 längs eines Durchmessers des Hohlraums 30 befestigt. Das eng gebündelte Licht des Lasers 1 (Fig. 1) durchsetzt den Kristallstab 7 in Längsrichtung durch zwei Bohrungen 37, 38 im Werkstück 32 längs der optischen Achse 39 (Fig. 3).

Da die mikrowellentechnischen Eigenschaften von Modulatorkristallen wie Lithiumtantalat, insbesondere deren Dielektrizitätskonstante stark temperaturabhängig sind, weist der zweite Hohlraum 31 erfindungsgemäss einen zweiten Modulatorkristall 40 in einer dem Kristall 7 entsprechenden Anordnung auf, um temperaturabhängige Verstimmungen zwischen den Leitungsresonatoren 30, 31 zu vermeiden. Der Kristall 40 hat optisch keine Wirkung auf den Strahl des Lasers 1. Die Kristalle 7, 40 werden über eine Leitung 41 und ein Drahtleitersystem 42, 43 mit hochfrequenter elektromagnetischer Energie beaufschlagt. Durch die Induktivitäten der dargestellten Drahtschlaufen 42, 43 und die Kapazitäten an den Kristallen zwischen den Drahtenden und den Deckeln 34, 33 sind beide Leitungsresonatoren 31, 30 auf die gleiche Resonanzfrequenz abgestimmt. Die Form der Bandfilterkurve ist durch einen Kopplungszweig 44 zwischen den Leiterschlaufen 42, 43 bestimmt, der durch eine Bohrung 45 zwischen den Hohlräumen 31, 30 hindurch führt.

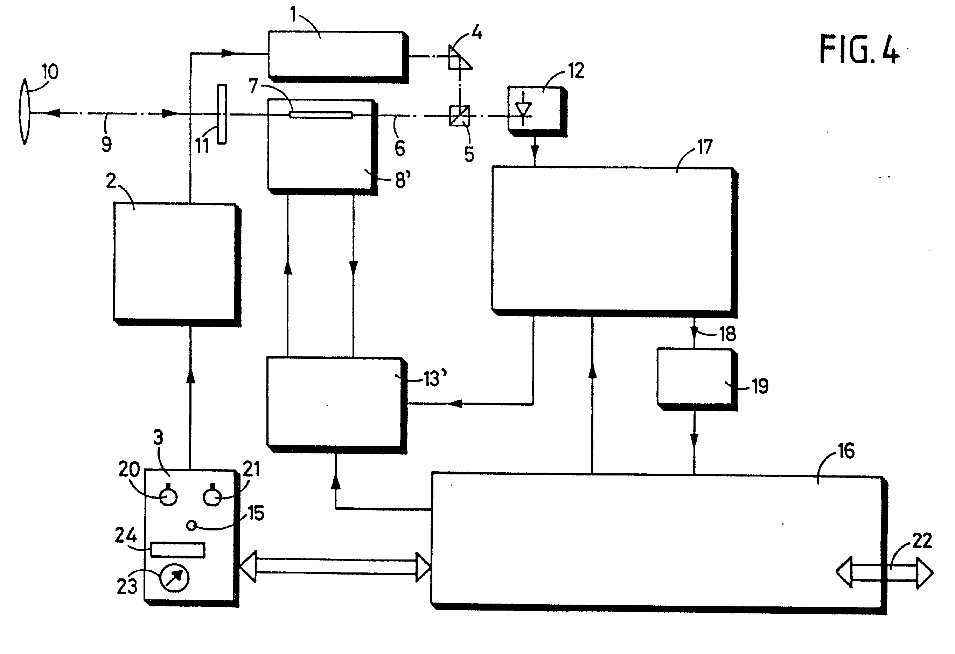

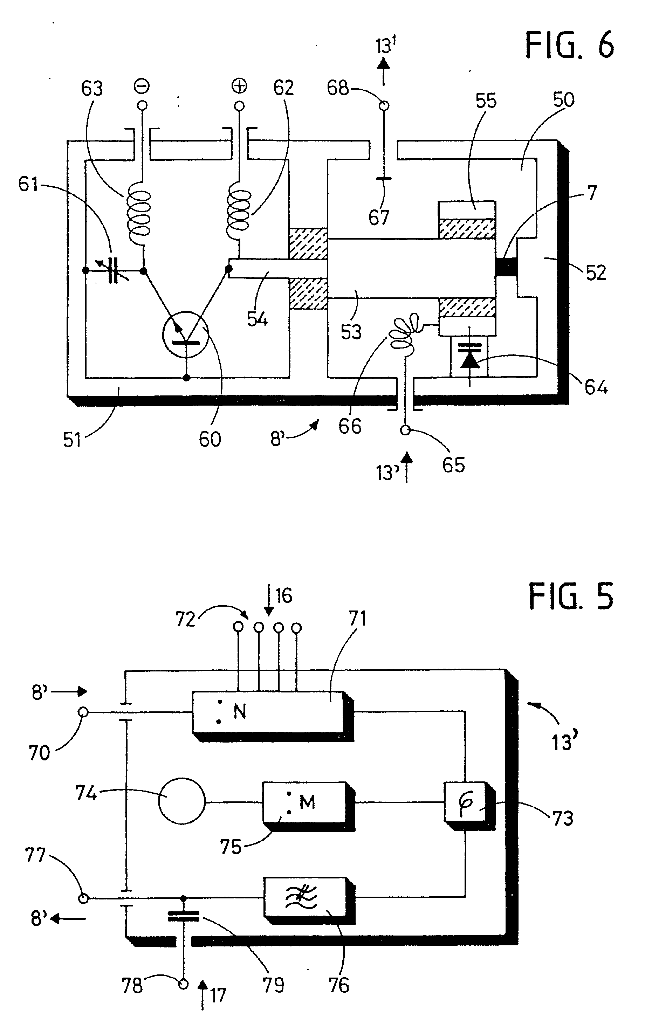

Der Aufbau des Modulators 8 für das Distanzmessgerät gemäss Fig. 1 lässt sich vereinfachen, wenn man den Leitungsresonator mit der Mikrowellenquelle in einem Bauelement vereinigt und diese Quelle mit einer Steuerstufe in einem Regelkreis betreibt. Fig. 4 zeigt das Schema eines derartigen Aufbaus, wobei die der Fig. 1 entsprechenden Elemente die gleichen Bezugszeichen tragen wie dort. Die Funktion des Distanzmessgerätes gemäss Fig. 4 ist die gleiche, wie zu Fig. 1 schon beschrieben, nur ist gem. Fig. 4 der Modulatorkristall 7 in einem Leitungsresonator angeordnet, welcher mit der Mikrowellenquelle in einem Modulator 8' vereinigt ist. Dies ist in Fig. 6 im einzelnen gezeigt. Die Modulationsfrequenzen werden mittels einer Steuerstufe 13' bestimmt, welche zusammen mit dem Modulator 8' einen Regelkreis (PLL) bildet. Diese Steuerstufe 13' ist in Fig. 5 im einzelnen gezeigt.

Gemäss Fig. 6 ist der Modulatorkristall 7 im Querschnitt dargestellt und zwischen einem elektrisch leitenden Gehäuse 52 und einem gegenüber dem Gehäuse 52 elektrisch isoliert montierten Innenleiter 53 montiert. Gehäuse 52 und Innenleiter 53 bilden zusammen den zylindrischen Leitungsresonator 50 des Modulators 8'. Das Gehäuse 52 weist noch einen Ansatz 51 auf, in dem ein Transistor 60 und eine variable Kapazität 61 angeordnet sind, welche den Leitungsresonator 50 zu einem im Modulator 8' wirksamen Mikrowellenoszillator vervollständigen. Die Basis des Transistors 60 ist mit dem Gehäuseansatz 51 direkt verbunden, während der Emitter über die Kapazität 61, welche z.B. zwischen 3-10 pF variieren kann, mit dem Gehäuseansatz 51 verbunden ist. Der Kollektor koppelt die in diesem Oszillator erzeugte Mikrowellenenergie direkt auf einen axialen Fortsatz 54 des Innenleiters 53. Gespeist wird der Oszillator von einer Gleichstromquelle, deren Pluspol, wie dargestellt, über eine Hochfrequenzdrossel 62 mit dem Kollektor und deren Minuspol über eine Hochfrequenzdrossel 63 mit dem Emitter des Transistors 60 verbunden ist.

Zur Steuerung der Frequenz des soweit beschriebenen Oszillators ist zwischen dem Gehäuse 52 und einem um den Innenleiter 53 herum und von diesem isoliert angeordneten leitenden Ring 55 eine Kapazitätsdiode 64 angeordnet, wobei das Frequenzsteuersignal von der Steuerstufe 13' (Fig. 4) über einen Eingang 65 und eine Hochfrequenzdrossel 66 auf den Ring 55 gelangt. Zur Auswertung der Ist-Frequenz ist durch das Gehäuse 52 eine kapazitive Sonde 67 mit einem Ausgang 68 verbunden, über welchen der Regelkreis zur Steuerstufe 13' geschlossen wird.

Die Steuerstufe 13' zeigt Fig. 5 im einzelnen. Ein Signal mit der Ist-Frequenz des Modulators 8' gelangt von dessen Ausgang 68 auf einen Eingang 70 eines programmierbaren Frequenzteilers 71, dessen Teilerzahl N durch ein Signal am Codeeingang 72 von der Steuerstufe 16 her bestimmt ist. Das herabgeteilte Signal des Teilers 71 wird in einem Phasenvergleicher 73 mit dem Signal eines frequenzstabilen Quarzoszillators 74 verglichen, dessen Frequenz in einem Teiler 75 durch eine Zahl M geteilt wird. Der Phasenvergleicher 73 erzeugt ein DC-Signal, dessen Pegel bei Gleichheit seiner Eingangsfrequenzen und -Phasen Null ist. Dieses DC-Signal durchläuft einen Tiefpass 76 und gelangt über den Ausgang 77 der Steuerstufe 13' auf den Eingang 65 des Modulators 8' zurück. Wie ersichtlich, ist durch Wahl der Teilerzahl N des Teilers 71 von der Steuerstufe 16 her die Frequenz des Modulators 8' im Leitungsresonator 50 regelbar. Erhöht man z.B., von einem abgestimmten Regelkreis ausgehend, die Teilerzahl N, so erhöht sich durch das Ausgangssignal des Phasenvergleichers 73 über eine Kapazitätsänderung der Kapazitätsdiode 64 die Frequenz des Modulators 8' solange, bis sich am Phasenvergleicher 73 wieder Phasengleichheit ergibt. Gegenüber dem Modulator 8 gemäss Fig. 1 kann man also durch Einbeziehen des Leitungsresonators 50 in den Oszillatorkreis 60, 61 auf Massnahmen zur Verbreiterung der Bandfiltercharakteristik der Resonatorkombination 30, 31 (Fig. 2, 3) verzichten.

Zum Zwecke der bereits zu Fig. 1 beschriebenen Frequenzmodulation der Modulationssignale mit den durch Steuerstufe 13' eingestellten Frequenzen wird dem DC-Signal am Ausgang 77 noch ein 1 kHz-Signal von der Synchronisierstufe 17 her über einen Eingang 78 und eine Koppelkapazität 79 aufgeprägt.

Unter Beachtung der oben beschriebenen Prinzipien lassen sich viele Ausführungsformen realisieren, ohne den Rahmen der Patentansprüche zu verlassen. Für den Lichtwandler 12 eignen sich empfindliche Systeme mit geringer Frequenzbandbreite, wie PIN-Dioden, Sekundärelektronenvervielfacher, Avalanche-Photodioden. Zur Erzielung hoher relativer Distanzmessgenauigkeit verwendet man zweckmässig Verfahren zur Kompensation von Brechungsindexschwankungen der Luft, wie Messung mit 2 Farben (vgl. U.S.-PS 3,424,531). Bei langfristiger Ueberwachung der Stabilität von Bauwerken, Staudämmen oder seismisch gefährdeten Gebieten lassen sich über die Steuerstufe 16 und den Bus 22 automatische Kontrollmessungen programmieren, ausführen und bei Schwankungen Alarmfunktionen auslösen.

## Ansprüche

1. Elektrooptisches Distanzmessgerät mit Mitteln (1) zur Erzeugung eines kollimierten Lichtstrahles (6), Modulationsmitteln (7, 8 ; 7, 8') zur Modulation des kollimierten Lichtstrahles (6) mit einer bestimmten Folge von Modulationsfrequenzen, Mitteln (10) zur Führung des modulierten Lichtstrahles (9) über die zwischen den Modulationsmitteln (7, 8 ; 7, 8') und einem Lichtreflektor befindliche Messdistanz, sowie zur Rückführung des modulierten Lichtstrahles (9) über die Messdistanz bis zu den Modulationsmitteln (7, 8), Mitteln zur Erzeugung (13, 13') und zur Auswahl (16, 17) von Modulationssignalen mit Modulationsfrequenzen aus der bestimmten Folge zum Betrieb der Modulationsmittel (7, 8, 8'), Detektionsmitteln (12, 16, 17) zur Bestimmung eines bestimmten Wertes der Modulationsphase des von den Modulationsmitteln (7, 8 ; 7, 8') empfangenen modulierten Lichtstrahles (9) bezogen auf den Lichtstrahl bei der Modulation, sowie Mitteln (16) zur Berechnung der Messdistanz aus den mit den Detektionsmitteln (12, 16, 17) bestimmten Modulationsfrequenzen, dadurch gekennzeichnet, dass die Modulationsmittel (7, 8 ; 7, 8') zur Modulation des kollimierten Lichtstrahles (6) einen elektrooptischen Modulatorkristall (7) und eine, an eine im Lichtstrahl (6) verwendete Lichtwellenlänge angepasste Viertelwellenlängenplatte (11) umfassen derart, dass der Lichtstrahl bei der Modulation zuerst den elektrooptischen Modulatorkristall (7), dann die Viertelwellenlängenplatte (11), die Messdistanz, dann in umgekehrter Richtung nochmals die Messdistanz, die Viertelwellenlängenplatte (11) und schliesslich wieder den elektrooptischen Modulatorkristall (7) durchläuft.

2. Elektrooptisches Distanzmessgerät nach Anspruch 1, dadurch gekennzeichnet, dass die Detektionsmittel (12, 16, 17) geeignet sind zur Bestimmung derjenigen Modulationsfrequenzen aus der bestimmten Folge, bei deren Verwendung die doppelte Messdistanz ein ganzzahliges Vielfaches der entsprechenden Modulationswellenlänge ist.

3. Elektrooptisches Distanzmessgerät nach Anspruch 1, gekennzeichnet durch eine in den Weg des modulierten Lichtstrahles (9) eingefügte Einrichtung zur Änderung der optischen Weglänge, sowie Mittel zur Wahl der Modulationsfrequenzen aus der bestimmten Folge derart, dass die Beträge aufeinanderfolgender Änderungen der optischen Weglänge, die zur Erzielung des bestimmten Wertes der Modulationsphase erforderlich sind, eine schrittweise Berechnung der Länge der Messdistanz erlauben.

4. Elektrooptisches Distanzmessgerät nach Anspruch 2 oder 3, gekennzeichnet durch einen polarisierenden Strahlenteiler (5), welcher derart zwischen den Mitteln (1) zur Erzeugung des kollimierten Lichtstrahles und dem elektrooptischen Modulatorkristall (7) angeordnet ist, dass der Lichtstrahl beim ersten Durchgang linear polarisiert wird und nach zweimaligem Durchgang durch die Viertelwellenlängenplatte (11) und den elektrooptischen Modulatorkristall (7) beim zweiten Durchgang von den Mitteln (1) zu seiner Erzeugung isoliert und auf die Detektionsmittel (12) umgelenkt werden kann.

5. Elektrooptisches Distanzmessgerät nach Anspruch 1, dadurch gekennzeichnet, dass der vom Lichtstrahl (6) durchlaufene elektrooptische Modulatorkristall (7) in einem Hohlraum (30) eines Mikrowellenresonators mit zwei gekoppelten Hohlräumen (30, 31) montiert ist, wobei sich in dem anderen Hohlraum (31) ein zweiter elektrooptischer Kristall (40) befindet, der nicht vom Lichtstrahl (6) durchlaufen wird, aber die gleichen mikrowellentechnischen Eigenschaften aufweist, wie der elektrooptische Modulatorkristall (7).

6. Elektrooptisches Distanzmessgerät nach Anspruch 5, dadurch gekennzeichnet, dass der vom Lichtstrahl (6) durchlaufene elektrooptische Modulatorkristall (7) und der zweite elektrooptische Kristall (40) Dielektrizitätskonstanten mit gleicher Temperaturabhängigkeit aufweisen.

7. Elektrooptisches Distanzmessgerät nach Anspruch 1, dadurch gekennzeichnet, dass der vom Lichtstrahl (6) durchlaufene elektrooptische Modulatorkristall (7) als kapazitive Last in einem entsprechend verkürzten Leitungsresonator (50) montiert ist, welcher durch einen wechselstrommässig an den Leitungsresonator (50) gekoppelten Transistor (60) erregt wird und sich in einem phasenangeschlossenen Regelkreis (PLL) (64 bis 68, 70 bis 79) zur Frequenzeinstellung befindet.

8. Elektrooptisches Distanzmessgerät nach Anspruch 7, dadurch gekennzeichnet, dass der Leitungsresonator (50) durch den Transistor (60) und eine variable Kapazität (61), welche im gleichen Gehäuse (51, 52) wie der Leitungsresonator (50) und diesem benachbart angeordnet sind, zu einem als Mittel (8') zur Modulation des Lichtstrahles (6) wirksamen Mikrowellenoszillator vervollständigt ist.

## Claims

1. Electrooptical distance measuring apparatus having means (1) for generating a collimated light ray (6), modulation means (7, 8 ; 7, 8') for modulating the collimated light ray (6) with a given series of modulation frequencies, means (10) for conducting the modulated light ray (9) over the distance to be measured between the modulation means (7, 8 ; 7, 8') and a light reflecting means and for reconducting the modulated light ray (9) over the distance to be measured to the modulation means (7, 8), means for generating (13, 13') and selecting (16, 17) modulating signals with modulation frequencies from the given series for driving the modulation means (7, 8, 8'), detection means (12, 16, 17) for determining a given value of the modulation phase of the modulated light ray (9) received by the modulation means (7, 8 ; 7, 8') relative to the light ray when being modulated, as well as means (16) for calculating the distance to be measured from the modulation frequencies determined by means of the detection means (12, 16, 17), thereby characterized, that the modulation means (7, 8 ; 7, 8') for modulating the collimated light ray (6) comprise an electrooptical modulating crystal (7) and a quarterwave plate (11) matched to a wavelength used in the light ray (6), arranged so that the light ray at its modulation first traverses the electrooptical modulating crystal (7) and then successively the quarterwave plate (11), the measured distance, the measured distance once more in reverse direction, the quarterwave plate (11) and finally again the electrooptical modulating crystal (7).

2. Electrooptical distance measuring apparatus according to claim 1, thereby characterized, that the detection means (12, 16, 17) are made for determination of those modulation frequencies from the given series, that cause, when used for modulating, twice the measured distance to be an integer number of modulation wavelengths.

3. Electrooptical distance measuring apparatus according to claim 1, characterized by a device, inserted into the path of the modulated light ray (9), for varying the length of the optical path, as well as means for selecting the modulating frequencies from the given series so that the amounts of successive adjustments of the length of the optical path, necessary for achieving the given value of the modulation phase may be used for a stepwise calculation of the length of the measured distance.

4. Electrooptical distance measuring apparatus according to claim 1 or claim 2, characterized by a polarizing beam splitter (5) arranged between the means (1) for generating the collimated light ray and the electrooptical modulating crystal (7) so, that the light ray on its first passage is linearly polarized and after twice passing the quarterwave plate (11) and the electrooptical modulating crystal (7), on its second passage is separable from the means (1) for its generation and directable to the detection means (12).

5. Electrooptical distance measuring apparatus according to claim 1, thereby characterized, that the electrooptical modulating crystal (7) traversed by the light ray (6) is disposed in a cavity (30) of a microwave resonator having two coupled cavities (30, 31), a second electrooptical crystal (40) being arranged in the other cavity (31), the second crystal (40) not being traversed by the light ray (6) but having substantially the same microwave properties as the electrooptical modulating crystal (7).

6. Electrooptical distance measuring apparatus according to claim 5, thereby characterized, that the electrooptical modulating crystal (7) traversed by the light ray (6) and the second electrooptical crystal (40) have dielectric constants with the same dependence on temperature.

7. Electrooptical distance measuring apparatus according to claim 1, thereby characterized, that the electrooptical modulating crystal (7) traversed by the light ray (6) is mounted as a capacitive load within a correspondingly shortened line resonator (50) which is excited by a transistor (60) being a.c. coupled to the line resonator (50) and which is connected within a phase locked loop (PLL) (64 to 68, 70 to 79) for frequency selection.

8. Electrooptical distance measuring apparatus according to claim 7, thereby characterized, that the line resonator (50) is completed to a microwave oscillator effective as a modulating means (8') for the light ray (6), by the transistor (60) and a variable capacitor (61) both arranged in a common housing (51, 52) with and in close proximity to the line resonator (50).

## Revendications

1. Télémètre électro-optique comportant des moyens (1) servant à produire un faisceau de lumière collimaté (6), des moyens de modulation (7, 8 ; 7, 8') servant à moduler le faisceau de lumière collimaté (6) avec une succession determinée de fréquences de modulation, des moyens (10) servant à guider le faisceau de lumière modulé (9) sur la distance à mesurer présente entre les moyens de modulation (7, 8 ; 7, 8') et un réflecteur, et envoyer le faisceau de lumière modulé (9) sur la distance de mesure jusqu'aux moyens de modulation (7, 8), des moyens pour produire (13, 13') et sélectionner (16, 17) des signaux de modulation possédant des fréquences de modulation à partir de la succession déterminée pour faire fonctionner les moyens de modulation (7, 8, 8'), des moyens de détection (12, 16, 17) servant à déterminer une valeur déterminée de la phase de modulation du faisceau de lumière modulé (9) reçu par les moyens de modulation (7, 8 ; 7, 8'), par rapport au faisceau de lumière lors de la modulation, ainsi que des moyens (16) servant à calculer la distance à mesurer à partir des fréquences de modulation déterminées par les moyens de détection (12, 16, 17), caractérisé par le fait que les moyens de modulation (7, 8 ; 7, 8'), servant à moduler le faisceau de lumière collimaté (6) comportent un cristal modulateur électrooptique (7) et une plaque quart-d'onde (11) adaptée à une longueur d'onde lumineuse utilisée dans le faisceau de lumière (6), de sorte que lors de la modulation, le faisceau de lumière traverse tout d'abord le cristal modulateur électro-optique (7), puis la plaque quart-d'onde (11), parcourt la distance à mesurer, puis parcourt à nouveau en sens inverse la distance à mesurer, et traverse la plaque quart-d'onde (11) et enfin à nouveau le cristal modulateur électro-optique (7).

2. Télémètre électro-optique selon la revendication 1, caractérisé en ce que les moyens de détection (12, 16, 17), sont appropriés pour déterminer, à partir de la succession déterminée, les fréquences de modulation, lors de l'utilisation desquelles le double de la distance à mesurer est égal à un multiple entier de la longueur d'onde de modulation correspondante.

3. Télémètre électro-optique selon la revendication 1, caractérisé par un dispositif inséré sur le trajet du faisceau de lumière modulé (9) et servant à modifier la longueur du trajet optique, ainsi que des moyens pour sélectionner les fréquences de modulation à partir de la succession déterminée, de telle sorte que les valeurs de variations successives de la longueur du trajet optique, qui sont nécessaires pour obtenir la valeur déterminée de la phase de modulation, permettent un calcul pas-à-pas de la longueur de la distance à mesurer.

4. Télémètre électro-optique selon la revendication 2 ou 3, caractérisé par un diviseur de faisceau (5) produisant une polarisation, qui est disposé entre les moyens (1) servant à produire le faisceau de lumière collimaté et le cristal modulateur électro-optique (7), que le faisceau de lumière est polarisé linéairement lors du premier passage et, après deux passages à travers la plaque quart-d'onde (11) et le cristal modulateur électro-optique (7), lors du second passage à travers le diviseur (5), est isolé des moyens (1) servant à le produire et peut être dévié en direction des moyens de détection (12).

5. Télémètre électro-optique selon la revendication 1, caractérisé en ce que le cristal modulateur électro-optique (7) traversé par le faisceau de lumière (6), est monté dans une cavité (30) d'un résonateur à micro-ondes comportant deux cavités accouplées (30, 31), tandis que dans l'autre cavité (31) est disposé un second cristal électro-optique (40), qui n'est pas traversé par le faisceau de lumière (6), mais possède les mêmes caractéristiques du point de vue de la technique des micro-ondes, que le cristal modulateur électro-optique (7).

6. Télémètre électro-optique suivant la revendication 5, caractérisé en ce que le cristal modulateur électro-optique (7) traversé par le faisceau de lumière (6) et le second cristal électro-optique (40) possèdent des constantes diélectriques présentant une dépendance identique vis-à-vis de la température.

7. Télémètre électro-optique selon la revendication 1, caractérisé en ce que le cristal modulateur électro-optique (7) traversé par le faisceau de lumière (6), est monté en tant que charge capacitive dans un résonateur de ligne (50) raccourci de façon correspondante, qui est excité par un transistor (60) accouplé, en courant alternatif, au résonateur de ligne (50) et est situé dans un circuit de régulation à verrouillage de phrase (PLL) (64 à 68, 70 à 79), qui sert à régler la fréquence.

8. Télémètre électro-optique selon la revendication 7, caractérisé en ce que le résonateur de ligne (50) est complété par le transistor (60) et une capacité variable (61), qui sont disposés dans le même boîtier (51, 52) que le résonateur de ligne (50) et au voisinage de ce dernier, pour former un oscillateur à micro-ondes agissant en tant que moyen (8') pour moduler le faisceau de lumière (6).

FIG. 1

FIG. 2

FIG. 3

FIG.4

FIG. 6

FIG. 5